# EUROPEAN PATENT SPECIFICATION

(11) **EP 1 414 232 B1**
(45) Date of publication and mention of the grant of the patent: **24.09.2008**
(21) Application number: 03023985.9
(22) Date of filing: 22.10.2003
(51) Int. Cl.: H04N 1/52, H04N 1/58

(54) **Half-tone based enhancement of black**
Halbton-basierte Verbesserung der Farbe schwarz
Amélioration du noir basée sur les demi-teintes

(30) Priority: 25.10.2002 US 280216
(43) Date of publication of application: 28.04.2004
(73) Proprietor: Xerox Corporation, Rochester, New York 14644 (US)
(72) Inventor: Kroon, Stephen M., Sherwood OR 97140 (US)
(74) Representative: Grünecker, Kinkeldey, Stockmair & Schwanhäusser Anwaltssozietät

(56) References cited:
- US-A- 4 700 399
- US-A- 5 777 758

## Description

The subject disclosure is directed generally to raster printing enhanced black, and more particularly to selectively printing enhanced black.

Raster printing systems accomplish printing by forming small marks or dots at selected pixel locations, and are commonly implemented as electrophotographic printers and ink jet printers. In raster printing systems, it is known to print one or more non-black color dots (e.g., cyan, magenta or yellow) with black dots, for example to improve black density and uniformity in dark gray regions. However, since color-to-color registration can be less than ideal, it may be preferable not to add non-black color to black near edges where color fringes will tend to show if mis-registration is present. This can be particularly important in light half-toned grays where even a slight mis-registration could induce a noticeable hue shift.

While there are known techniques directed to reducing color fringes, they can be complex and computationally expensive.

US 5,777,758 describes a printer system and method for printing a clear image. When black characters or characters printed in a black reverse are expanded, the contours thereof are printed in black only and the inside or the outside of the contours which are designated to be printed in black color are printed in the three colors such as magenta, cyan and yellow in half tone or in an pseudo-half tone as well as in black.

US 4700399 describes a color image processing apparatus comprising a detector for detecting an edge of an image and a control unit for controlling a black reproduction quantity for the edge in accordance with an output of the detector.

It is an object of the present invention to improve a technique for reducing color fringes particularly with regard to reducing complexity and/or costs. This object is achieved by providing a method according to claim 1. Embodiments of the invention are set forth in the dependent claims.

### BRIEF DESCRIPTION OF DRAWINGS

FIG. 1 is a schematic block diagram of an embodiment of a printing system.
FIG. 2 is a schematic illustration of an embodiment of a pixel array.
FIG. 3 is a schematic illustration of an embodiment of a half-tone threshold array that can be associated with the pixel array of FIG. 2.
FIG. 4 is a schematic illustration of an embodiment of a half-tone cell that was used to form the half-tone threshold array of FIG. 3.
FIG. 5 is a flow diagram of an embodiment of a procedure for selectively printing color enhanced black pixels.

### DETAILED DESCRIPTION OF THE DISCLOSURE

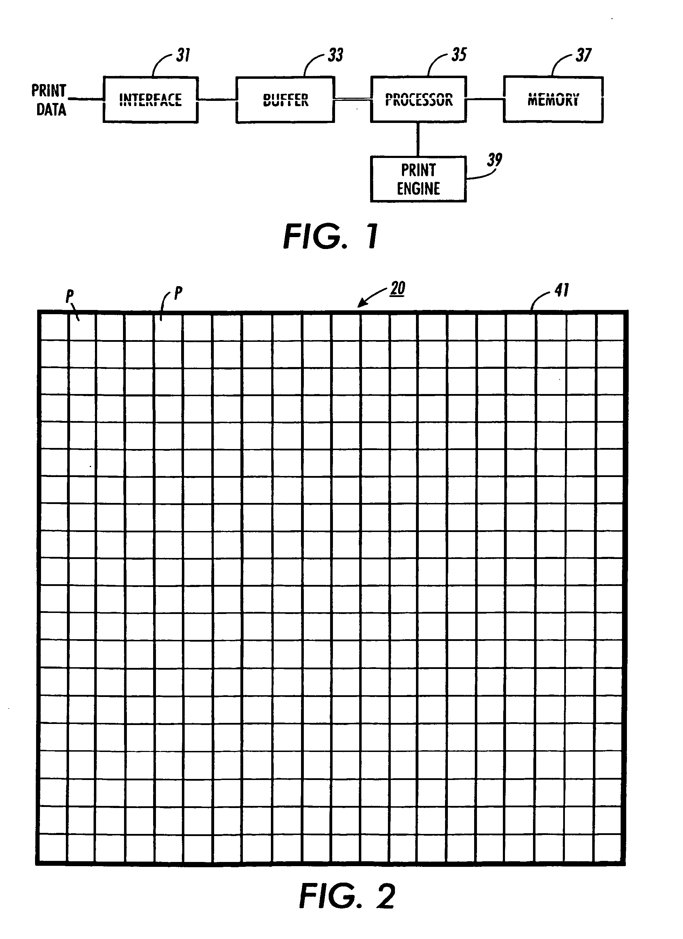

FIG. 1 is a schematic block diagram of an embodiment of a printing apparatus that includes an interface 31 that receives print data, for example from a host computer, and stores the print data in a buffer memory 33. A processor 35 is configured to process the print data to produce bit mapped raster data that is stored in a memory 37. A print engine 39 prints an image pursuant to the bit mapped raster data generated by the processor 35. The print engine 39 can be an electrophotographic print engine or an ink jet print engine, for example.

Printing is accomplished by selectively printing, depositing, applying or otherwise forming markings such as dots on a receiver surface or substrate that can be a print output medium such as paper or a transfer surface such as a transfer belt or drum. If a transfer surface is used, the image formed or printed on the transfer surface is appropriately transferred to a print output medium such as paper.

FIG. 2 is a schematic illustration of an embodiment of an array 20 of pixel locations P that can be used to define the locations on a print output medium 41 that can be marked or printed. A marking of a particular color (e.g., cyan magenta, yellow or black) that is printed or deposited at a pixel location can be conveniently called a dot. Black refers to a marking made with a black color, as distinguished from process black or composite black which refer to a marking formed of a cyan marking, a yellow marking and a magenta marking that are closely positioned or superimposed, for example.

Each pixel location P can, for example, be marked or printed with (a) one or more non-black color dots (e.g., cyan, magenta or yellow), (b) a black dot by itself, or (c) a black dot and at least one non-black color dot. For ease of reference, pixel locations that are requested to be printed with only black (i.e., without any other color) can be called black pixel locations or true black pixel locations. The printing of a non-black color dot with a black dot at a black pixel location (i.e., a location originally requested to be printed with black only) can provide for an enhanced black pixel, and this disclosure is generally directed to printing non-black color with black at selected black pixel locations. In other words, this disclosure contemplates selectively adding non-black color to requested black only pixels.

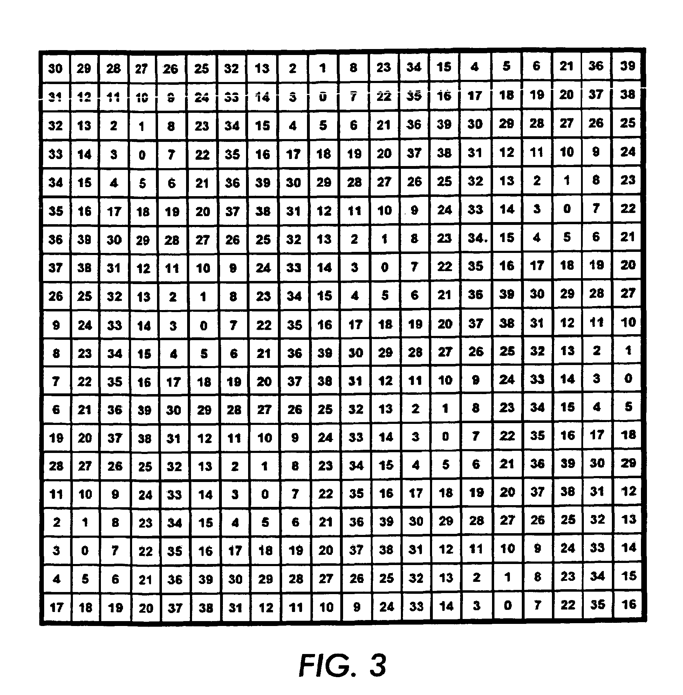

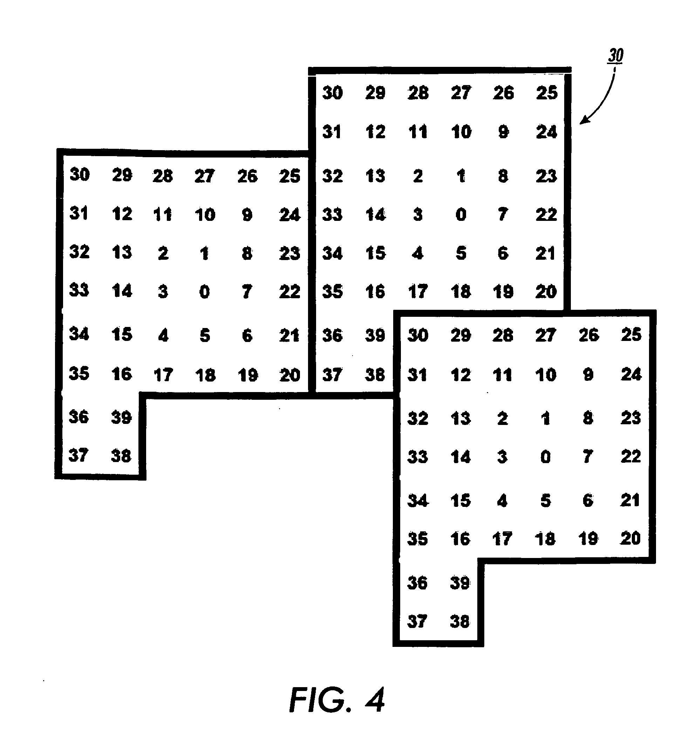

FIG. 3 is a schematic illustration of an embodiment of a simplified black half-tone threshold array that is overlaid on the pixel array of FIG. 2 and can be helpful in discussing the disclosed techniques. For ease of illustration, the threshold array is a tessellation of a 41-level half-tone cell shown in FIG. 4. In actual implementations, the half-tone cells employed can be larger or smaller. A half-tone threshold array is employed to map or transform multi-bit per pixel per color plane data (e.g., continuous tone, gray-scale, luminance, darkness, intensity or multi-level pixel data) to bit-mapped raster data that contains one bit per pixel per color plane. In a given color plane, a pixel that has a darkness or intensity level that is darker than the associated threshold level is turned on to be marked with that color, for example.

It should be appreciated that increasing or greater darkness can be represented by increasing numbers or decreasing numbers, depending upon implementation. In the figures, for convenience, increasing or greater darkness is represented by increasing numbers, whereby a darker threshold level is represented by a greater number while a lighter or less dark level is represented by a smaller number. In a different implementation, a darker threshold level can be a smaller number. For ease of reference, the relation between threshold levels can be expressed in terms of a threshold level being darker or lighter (i.e., less dark) than another threshold level.

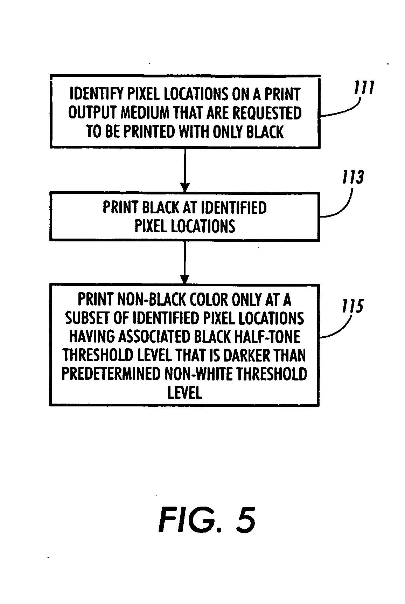

FIG. 5 is a schematic flow diagram of a procedure for selectively printing enhanced black pixels wherein non-black color is printed with black at selected black pixel locations.

At 111 pixel locations that are requested to be printed with only black (i.e., black pixel locations) are selected or identified.

At 113 black is printed at the identified pixel locations.

At 115 non-black color is printed only at a subset (i.e., some or all) of the identified pixel locations that have an associated black half-tone threshold level that is darker than a predetermined non-white threshold level (i.e.,greater than the lightest or least dark threshold level), such that non-black color is not printed at identified black pixel locations having an associated black half-tone threshold level that is lighter than or equal to the predetermined non-white threshold level. By way of illustrative example, the subset of the identified pixel locations that have an associated black half-tone threshold level that is darker than a predetermined non-white threshold level can be determined or selected stochastically.

Identified pixel locations that are marked with a non-black color can be marked with different non-black colors. Also, some or all of the identified pixel locations that are marked with a non-black color can be marked with a single non-black color, which can be different for different pixel locations, or which can be the same for all pixel locations. Alternatively, some or all of the identified pixel locations that are marked with a non-black color can be marked with a plurality of non-black colors.

In this manner, identified pixel locations having an associated black half-tone threshold level that is lighter than or equal to the predetermined non-white threshold level are not printed with non-black color and thus are printed only with black, while at least some of the identified pixel locations having a black half-tone threshold level that is darker than the predetermined non-white threshold level are printed with black and at least one non-black color. In other words, only black is printed at identified pixel locations having a black half-tone threshold level that is lighter than or equal to the predetermined non-white threshold, while black and at least one non-black color are printed at a subset of the identified pixel locations having a black half-tone threshold level that is darker than the predetermined non-white threshold level. Thus, the printer refrains from printing non-black color at identified pixel locations having a black half-tone threshold level that is lighter than or equal to the predetermined non-white threshold level.

It should be appreciated that printing of non-black color can occur before or after printing of black.

## Claims

1. A method of printing comprising:
identifying (111) pixel locations on a print output medium that are requested to be marked with only black;
printing black at the identified pixel locations (113);
**characterized by**
printing non-black color (115) at a subset of the identified pixel locations, each pixel location of the subset having an associated black half-tone threshold level that is darker than a predetermined non-white threshold level;
whereby only black is printed at identified pixel locations having an associated black half-tone threshold level that is lighter than or equal to the predetermined non-white threshold level, and whereby black and a non-black color are printed only at the subset of identified pixel locations.

2. The method of claim 1 wherein printing non-black color comprises printing different non-black colors at different pixel locations of the subset of identified pixel locations.

3. The method of claim 1 wherein printing non-black color comprises printing a single non-black color at each of the pixel locations of the subset of identified pixel locations.

4. The method of claim 1 wherein printing non-black color comprises printing a plurality of non-black colors at each of the pixel locations of the subset of identified pixel.

5. The method of claim 1 wherein printing non-black color comprises printing non-black color at a stochastically determined subset of the identified pixel locations that have an associated black half-tone threshold level that is darker than or equal to a predetermined non-white threshold level.

6. The method of claim 1 wherein:
printing black comprises electrophotographically printing black at the identified pixel locations;
printing non-black color comprises electrophotographically printing non-black color at the subset of identified pixel.

7. The method of claim 1 wherein:
printing black comprises ink jet printing black at the identified pixel locations; and
printing non-black color comprises ink jet printing non-black color at the subset of identified pixel.

## Patentansprüche

1. Ein Verfahren zum Drucken, umfassend:
Identifizieren (111) von Bildelementplätzen auf einem Druckausgabemedium, von denen gefordert wird, dass diese ausschließlich mit Schwarz markiert werden;
Drucken (113) von Schwarz an den identifizierten Bildelementplätzen;
**gekennzeichnet durch**
Drucken von nicht-schwarzer Farbe (115) auf eine Untergruppe von identifizierten Bildelementplätzen, wobei jeder Bildelementplatz der Untergruppe ein zugeordnetes, schwarzes Rasterschwellniveau aufweist, das dunkler ist als ein vorbestimmtes, nichtweißes Schwellniveau;
wobei ausschließlich Schwarz an identifizierten Bildelementplätzen gedruckt wird, die ein zugeordnetes schwarzes Rasterschwellniveau aufweisen, das heller ist als oder gleich ist zu dem vorbestimmten nicht-weißen Schwellniveau, und wobei Schwarz und eine nicht-schwarze Farbe ausschließlich bei der Untergruppe der identifizierten Bildelementplätze gedruckt wird.

2. Das Verfahren gemäß Anspruch 1, wobei das Drucken von nicht-schwarzer Farbe umfasst, verschiedene nicht-schwarze Farben an verschiedenen Bildelementplätzen der Untergruppe von identifizierten Bildelementplätzen zu drucken.

3. Das Verfahren gemäß Anspruch 1, wobei das Drucken von nicht-schwarzer Farbe umfasst, eine einzige, nicht-schwarze Farbe an jedem der Bildelementplätze der Untergruppe der identifizierten Bildelementplätze zu drucken.

4. Das Verfahren gemäß Anspruch 1, wobei das Drucken von nicht-schwarzer Farbe umfasst, eine Vielzahl von nicht-schwarzen Farben an jedem der Bildelementplätze der Untergruppe der identifizierten Bildelemente zu drucken.

5. Das Verfahren gemäß Anspruch 1, wobei das Drucken von nicht-schwarzer Farbe umfasst, nicht-schwarze Farbe bei einer stochastisch bestimmten Untergruppe der identifizierten Bildelementplätze zu drucken, die ein zugeordnetes schwarzes Rasterschwellniveau aufweisen, das dunkler ist als oder gleich ist zu einem vorbestimmten nicht- weißen Schwellniveau.

6. Das Verfahren gemäß Anspruch 1, wobei
das Drucken von Schwarz umfasst, Schwarz an den identifizierten Bildelementplätzen elektrofotografisch zu drucken;
das Drucken von nicht-schwarzer Farbe umfasst, nicht-schwarze Farbe bei der Untergruppe der identifizierten Bildelemente elektrofotografisch zu drucken.

7. Das Verfahren gemäß Anspruch 1, wobei
das Drucken von Schwarz umfasst, Schwarz an den identifizierten Bildelementplätzen als Tintenstrahl zu drucken; und
das Drucken von nicht-schwarzer Farbe umfasst, nicht-schwarze Farbe bei der Untergruppe der identifizierten Bildelemente als Tintenstrahl zu drucken.

## Revendications

1. Procédé d'impression comprenant le fait de:
identifier (111) des emplacements de pixels sur un support de sortie d'impression qui doivent être marqués avec du noir uniquement ;
imprimer (113) du noir aux emplacements de pixels identifiés ;
**caractérisé par**
imprimer (115) une couleur autre que noire à un sous-ensemble des emplacements de pixels identifiés, chaque emplacement de pixel du sous-ensemble ayant un niveau seuil de demi-teintes de noir associé qui est plus foncé qu'un niveau seuil d'une couleur autre que blanc prédéterminé ;
de sorte que seul du noir est imprimé à des emplacements de pixels identifiés ayant un niveau seuil de demi-teintes de noir associé qui est plus clair que ou égal au niveau seuil d'une couleur autre que blanc prédéterminé, et de sorte que du noir et une couleur autre que noire sont imprimés uniquement au sous-ensemble d'emplacements de pixels identifiés.

2. Procédé de la revendication 1 dans lequel l'impression d'une couleur autre que noire comprend l'impression de différentes couleurs autres que noire à des emplacements de pixels distincts du sous-ensemble d'emplacements de pixels identifiés.

3. Procédé de la revendication 1 dans lequel l'impression d'une couleur autre que noire comprend l'impression d'une seule couleur autre que noire à chacun des emplacements de pixels du sous-ensemble d'emplacements de pixels identifiés.

4. Procédé de la revendication 1 dans lequel l'impression d'une couleur autre que noire comprend l'impression d'une pluralité de couleurs autres que noire à chacun des emplacements de pixels du sous-ensemble de pixel identifié.

5. Procédé de la revendication 1 dans lequel l'impression d'une couleur autre que noire comprend l'impression d'une couleur autre que noire à un sous-ensemble, déterminé de manière stochastique, des emplacements de pixels identifiés qui ont un niveau seuil de demi-teintes de noir associé qui est plus foncé que ou égal à un niveau seuil d'une couleur autre que blanc prédéterminé.

6. Procédé de la revendication 1 dans lequel :
l'impression du noir comprend l'impression du noir de manière électro-photographique aux emplacements de pixels identifiés;
l'impression d'une couleur autre que noire comprend l'impression d'une couleur autre que noire de manière électro-photographique au sous-ensemble de pixel identifié.

7. Procédé de la revendication 1 dans lequel :
l'impression du noir comprend l'impression à jet d'encre du noir aux emplacement de pixel identifié; et
l'impression d'une couleur autre que noire comprend l'impression à jet d'encre d'une couleur autre que noire au sous-ensemble de pixel identifié.
